# EUROPEAN PATENT SPECIFICATION

(11) **EP 2 120 238 B1**
(45) Date of publication and mention of the grant of the patent: **19.03.2014**
(21) Application number: 07828490.8
(22) Date of filing: 27.09.2007
(51) Int. Cl.: G11B 27/10, G11B 20/10, G11B 27/00, G11B 27/34, G11B 27/11

(54) **REPRODUCING APPARATUS, REPRODUCING METHOD, PROGRAM, AND RECORDING MEDIUM**
WIEDERGABEVORRICHTUNG, WIEDERGABEVERFAHREN, PROGRAMM UND AUFZEICHNUNGSMEDIUM
APPAREIL DE REPRODUCTION, PROCÉDÉ DE REPRODUCTION, PROGRAMME ET SUPPORT D'ENREGISTREMENT

(30) Priority: 21.02.2007 JP 2007040398
(43) Date of publication of application: 18.11.2009
(73) Proprietor: D&M Holdings, Inc., Kanagawa 210-8569 (JP)
(72) Inventor: ONIZUKA, Kazuhiro, Kawasaki-shi Kanagawa 210-8569 (JP); ENDO, Yasuhiro, Kawasaki-shi Kanagawa 210-8569 (JP)
(74) Representative: Hackney, Nigel John
(86) International application number: PCT/JP2007/068744
(87) International publication number: WO 2008/102471

(56) References cited:
- EP-A2- 1 229 544
- EP-A2- 1 229 544
- EP-A2- 1 260 979
- EP-A2- 1 304 700
- EP-A2- 1 394 791
- EP-A2- 1 519 384
- WO-A1-2005/124779
- WO-A1-2006/104109
- GB-A- 2 414 110
- JP-A- 2001 344 950
- JP-A- 2005 196 833
- JP-A- 2007 312 071
- JP-B2- 3 870 656
- JP-B2- 3 877 693
- US-A1- 2002 135 607
- 'PC Jo de MP3 File o Shiyo shita Konkakuteki na DJ Play o Jitsugen . DJ Software 'DJS' [SVJ-DL01] o Shinhatsubai', [Online] 18 October 2005, pages 1 - 3, XP003024713 Retrieved from the Internet: <URL:http://www.pioneer.jp/press/release513 -j.html>
- 'DJ SOFTWARE SVJ-DL01', [Online] 29 November 2007, pages 1 - 7, XP003024714 Retrieved from the Internet: <URL:http://www.pioneer.jp/cdj/products/djs oftware/svj_dl01.html>

## Description

### Technical Field

The present invention relates to a technology of reproducing a plurality of data files on a per reproduction-list basis.

### Background Art

Nowadays, various functions for adding special sound effects to music tracks are adopted in a reproducing apparatus used by a disc jockey (hereinafter abbreviated as DJ) or the like who provides music in a club or the like. Examples thereof include "cue (hot start) reproduction" for directly accessing an arbitrary point specified in a music track and starting reproduction, "loop reproduction" for repeating reproduction of an arbitrary range specified in a music track, and the like. Sound effect points (reproduction start/end points) for implementing those functions are set as "cue points" by a user such as a DJ, and written in an information memory provided in the reproducing apparatus.

In such a conventional reproducing apparatus using an optical disc, when a cue point is set, set cue point information (information on a track head position in reproduction) is written in an information memory in association with an audio file (music track). Further, when a certain audio file is selected, audio data corresponding to the cue point is read in advance from the optical disc, and stored in a buffer memory. When reproduction from the cue point is instructed in that state, data is instantaneously read from the buffer memory (see, e.g., JP 2003-132634 A).

EP1229544 discloses an information reproducing apparatus, which allows a user to set cue points for specifying start positions for playing back a disc. The apparatus has a backup memory that stores the cue points in association with information about the disc (disc identification information). When a disc is loaded in the apparatus, the disc identification information is retrieved from the backup memory (29) and the cue points associated with that disc are shown on a display (3).

US2002/135607 discloses an information processing method and apparatus. The apparatus can be used to reproduce an audio visual (AV) stream recorded on a recording medium. The apparatus has a user interface that allows a user to specify start and end points of playback domains in the audio visual stream. Based on the user input information and the content of the AV steam, the apparatus creates a list of the playback domains for reproduction.

In recent years, due to the development of a larger-capacity hard disk or the like and the advancement of a data compression/decompression technology, a large number of, e.g., several thousands to several tens of thousands of audio files can be stored in a single recording medium. It is typical for a user to create a reproduction list in advance by selecting files desired to be reproduced among numerous audio files recorded in a hard disk or the like, and perform reproduction on a per reproduction-list basis (see, e.g., JP 2005-196833 A).

Also in DJing or the like, there has been a transition from conventional playing on a per optical-disc basis to playing on the basis of each play list concerning numerous audio files stored in a hard disk or the like. For example, there has been developed software for performing a so-called "DJ play" with audio files stored in a recording medium in a personal computer (product information SVJ-DJ01, Pioneer Corporation, [online], [retrieved on February 7, 2007], the Internet (URL:http://pioneer.jp/cdj/products/djsoftware/svj_d101.html))

In the software described above, only a limited number of (eight) cue point information sets can be set for each reproduction list ("list hot cue" function). A user performs cue/loop reproduction by clicking on eight buttons to which cue/loop points set on a per reproduction-list basis have been allocated.

### Disclosure of the Invention

However, playing on a per reproduction-list basis using the above-mentioned software gives a sense of unfamiliarity to a user who has been used to conventional playing on a per optical-disc basis. That is, in a conventional optical disc reproducing apparatus, two or three cue switches and two or three loop switches are provided such that a cue/loop point is allocated to each of the switches on a per track basis. In the above-mentioned software, on the other hand, the user performs an operation by clicking on the eight buttons to which the cue/loop points have been allocated. This gives a sense of unfamiliarity with the operation to the user who is familiar with the conventional optical disc reproducing apparatus.

In addition, because the number of buttons is limited, the number of cue points or the like to be set is limited, which substantially limits the range of playing performed by the user. Moreover, a real-time operation is required of a DJ play, but it is difficult for the user to always remember the contents allocated to such a large number of buttons, and momentarily select and operate a desired button. Thus, the method in which the cue/loop points are allocated to the large number of switches on a per reproduction-list basis has presented a problem of low convenience and low operability to the user.

The same problem is also encountered in a reproducing apparatus which includes a fixed memory medium such as a hard disk, and implements the function of the above-mentioned software with the numerous data files stored in the storage medium. Thus, the prior art described above has presented the problem of low convenience and low operability to the user. It is an object of the present invention to solve the problems in the prior art described above.

According to a first aspect of the present invention, there is provided a reproducing apparatus as set out in claim 1.

In the above-mentioned configuration, when the point has been set for the data file in the selected reproduction list, that effect may be reported to the user.

In addition, when the point has been set for the data file in the selected reproduction list, the point may be reported to the user.

Further, when the point has been set for the data file in the selected reproduction list, information associated with the point may be reported to the user. According to a second aspect of the present invention, there is a provided a reproducing method as set out in claim 7.

According to a third aspect of the present invention, there is provided a program as set out in claim 8.

The program described above may be distributed by downloading from a server via a public network or the like, or may be distributed via a recording medium having the program recorded thereon, such as an optical disc or the like. By incorporating the program described above in operation software for a reproducing apparatus or in software for implementing a function of such a reproducing apparatus on a general-purpose computer or the like, the present invention can be practiced.

### Brief Description of the Drawings

FIG. 1 is a block diagram illustrating a configuration of a reproducing apparatus according to an embodiment of the present invention.
FIG. 2 is a view illustrating an example of an operation panel in the reproducing apparatus according to the embodiment of the present invention.
FIG. 3 is a view illustrating examples of configurations of management data and reproduction list data in the embodiment of the present invention.

### Best Mode for carrying out the Invention

Hereinbelow, referring to the drawings, an embodiment of the present invention is described in detail. It is to be noted that the embodiment shown below is only an example, and the present invention is not limited thereto.

A reproducing apparatus according to this embodiment shown below enables an operator such as a DJ to freely reproduce digital audio data recorded in a hard disk, and is appropriately usable, for example, in a club, a studio, a home party, or the like.

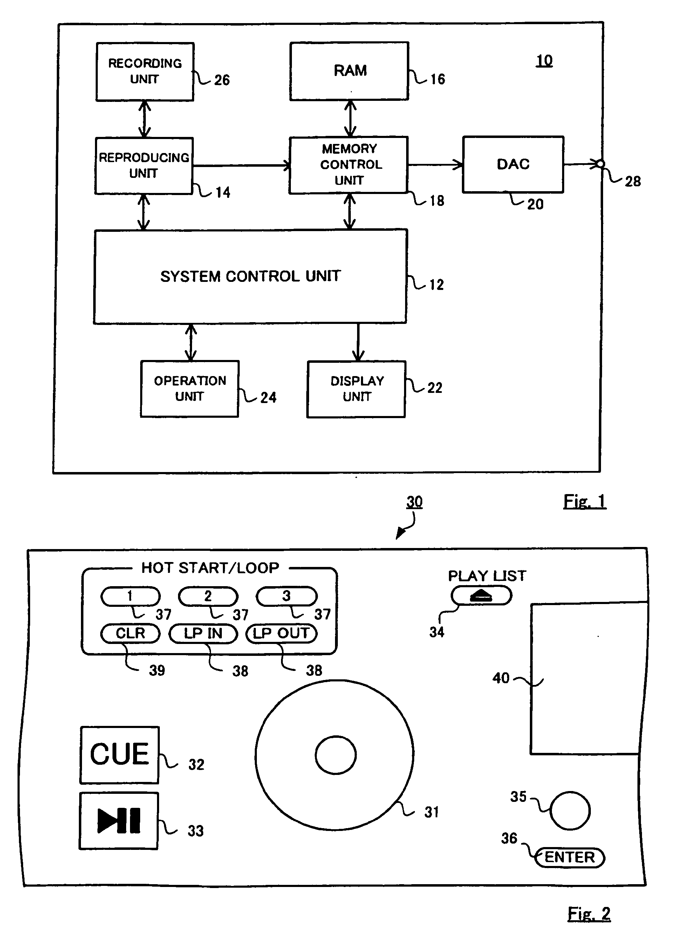

FIG. 1 illustrates a configuration of the reproducing apparatus according to the embodiment of the present invention. A reproducing apparatus 10 illustrated in FIG. 1 includes a system control unit 12, a reproducing unit 14, a random access memory (RAM) 16, a memory control unit 18, a digital to analog converter (DAC) 20, a display unit 22, and an operation unit 24.

The system control unit 12 generally controls an operation of the reproducing apparatus 10.

The reproducing unit 14 includes a hard disk drive, and reads and reproduces a digital audio data file recorded on a recording medium (hard disk) 26. The format of the audio file may be anything such as Moving Picture Experts Group audio layer 3 (MP3), Audio Interchange File Format (AIFF), Word Audio Video (WAV), or Musical Instruments Digital Interface (MIDI).

The RAM 16 temporarily stores a digital audio signal read by the reproducing unit 14.

The memory control unit 18 controls writing of data reproduced from the reproducing unit 14 to the RAM 16, and manages memory addresses of the RAM 16. In addition, the memory control unit 18 reads audio data stored in the RAM 16 in the order of addresses and at a speed each specified by the system control unit 12 described later.

The DAC 20 converts the digital audio data read by the memory control unit 18 from the RAM 16 into an analog audio signal. The analog audio signal output from the DAC 20 is output to a device such as a speaker via an output terminal 28. Between the DAC 20 and the output terminal 28, an amplifier, for example, is provided to output the amplified analog audio signal. In the case where the device to which the audio data is output can accept digital data, the DAC 20 need not be provided.

The display unit 22 includes a liquid crystal display device or the like. The display unit 22 displays information necessary for an operation, such as the reproduction time of a currently reproduced track, chapter, or file, and the content of the operation.

The operation unit 24 is configured by including an operation panel including operation buttons and the like, and accepts an operation input from a user. FIG. 2 illustrates an example of an operation panel 30. The operation panel 30 illustrated in FIG. 2 includes a jog dial 31, a reproduction switch 32, a reproduction stop switch 33, a reproduction list selection switch 34, a selection knob 35, an enter switch 36, hot start switches 37, loop switches 38, and a clear switch 39. The operation panel 30 is also provided with a display screen 40 included in the display unit 22. It will be easily appreciated that the operation panel 30 may also be provided with another operation switch and the like for controlling an operation.

The jog dial 31 accepts an input for changing, in accordance with a rotation speed and a rotation direction thereof, the speed and the order at and in which the audio data stored in the RAM 16 is read. In a state where the jog dial 31 is not operated, the audio data is read from the RAM 16 in a normal order and at a normal speed. The rotating operation of the jog dial 31 enables so-called scratch reproduction or the like.

The reproduction switch 32 and the reproduction stop switch 33 accept respective instructions related to the starting and stopping of the reproduction of the audio data.

The reproduction list selection switch 34 is provided for the selection of any one of a plurality of preset play lists. When the reproduction list selection switch 34 is pressed, selectable reproduction lists are displayed on the display screen 40. By rotating the selection knob 35, anyone of the selectable reproduction lists is selected, and determined with the enter switch 36. When an audio file contained in the determined reproduction list is further selected with the selection knob 35, the reproduction of the audio file becomes possible.

The hot start switches 37 are provided in three systems. To each of the hot start switches 37, the time code of one of the audio files in one of the reproduction lists is allocated. When the hot start switch 37 is pressed during the reproduction of an audio file in a specified reproduction list, reproduction from a hot start point set for the audio file is performed. As is described hereinbelow in detail, the hot start point can be set to different points for one audio file on a per reproduction-list basis.

The loop switches 38 include one system in a combination of loop start/end points. To the loop switches 38, the time codes of a loop start point and a loop end point of a single audio file or each of a plurality of audio files in one of the reproduction lists are allocated. When one of the loop buttons is pressed during the reproduction of a specified reproduction list, loop reproduction from the loop start point set for the reproduction list is performed, or the loop reproduction is ended. As is described hereinbelow in detail, the loop point can be set to different points on a per reproduction-list basis.

In this embodiment, when an audio file for which the hot start point and the loop point have been set is selected in a reproduction list, a predetermined amount of (corresponding to, e.g., 3 seconds) audio data starting from each of the points is read to the RAM 16. As a result, even when hot start or loop reproduction is instructed in a normal reproduction state, seamless continuous reproduction which does not give a feeling of artificiality is enabled.

It will be easily appreciated that the numbers of the hot start switches 37 and the loop switches 38 are not limited to the numbers set above, and any numbers thereof may be set.

In addition, to allow the user to visually easily recognize whether or not the hot start point or the loop point has been set to the reproduction list, a light emission diode (LED) is provided inside each of the hot start switches 37 and the loop switches 38. It is also possible that the LED may light only when the hot start point or the loop point has been set.

The clear switch 39 is provided to clear (erase) hot start point information or loop point information described later which has been set and registered on a per reproduction-list basis. For example, when any one of the hot start buttons is pressed with the clear switch 39 being pressed, the hot start point information allocated to the hot start button is erased. At this time, the list data of reproduction list data described later is rewritten.

Note that it is also possible that, e.g., a "re-operate button" may be provided so as to prevent the hot start point information and the loop point information from being erased by an erroneous operation of the clear switch 39, cancel the clear operation, and allow the original state to be restored.

Hereinbelow, a description is given of a method for managing the reproduction lists in this embodiment.

An audio file reproduced in the reproducing unit 14 is stored in a hard disk included in the recording medium 26. In the recording medium 26, management data for managing the stored audio file has been recorded. The management data is updated on registration and deletion of an audio file in and from the recording medium 26, and also changed by an editing operation by the user.

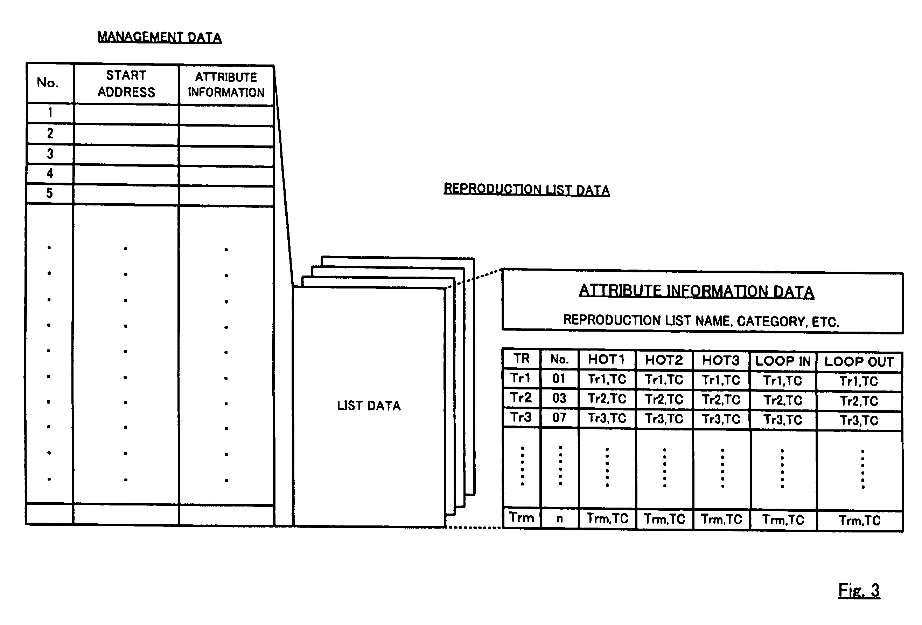

FIG. 3 illustrates an example of a configuration of the management data. As illustrated in FIG. 3, an identification number (No.) is added to data stored in the recording medium 26, and managed in the management data in association with a starting address in the hard disk. In addition, the management data for each of the audio files contains attribute information (such as name, genre, and album name) acquired from the meta data of the audio file. In the management data, a large number of, e.g., several thousands to several tens of thousands of audio files are stored.

In addition, aside from the management data, the reproduction list data for managing the reproduction lists is recorded on the recordingmedium 2 6. The reproduction lists included in the reproduction list data are lists for managing, e.g., ten to fifty audio files selected from among the stored audio files. The reproduction list data is configured by including one or a plurality of reproduction lists.

In the example illustrated in FIG. 3, each of the reproduction lists contains attribute information data and list data.

The attribute information data includes the attribute information of the reproduction list, such as reproduction list name and category.

The list data includes the identification numbers in the management data of the audio files included in the reproduction list. The list data is managed with track numbers (Tr1, ..., and Trn) indicating the order of reproduction, and track numbers are added on a per identification-number basis. The track numbers are automatically added in the order of, e.g., recording, and can be changed by the user him/herself after registration.

When a music track in the reproduction list is selected, and an instruction to reproduce the music track is given, data is reproduced from the starting address based on the management data. Note that the list data may also include the addresses of the individual audio files in the hard disk. In addition, the list data contains the attribute information such as the names of the audio files, though not illustrated.

In addition, the list data also contains the hot start point information and the loop point information which have been set for each of the audio files contained in the reproduction list. The hot start point information includes point information (HOT1 to HOT3) on the hot start points, and point information (LOOP IN and LOOP OUT) for loop reproduction. Those point information sets can be set for a certain audio file on a per reproduction-list basis.

The hot start point information (HOT1 to HOT3) indicates start point information for the hot start of an audio file in the reproduction list, and includes the track number (Tr No.) of the audio file, and the time code (TC) in the track. The time code (TC) indicates a point which is set for the audio file specified by the track number (Tr), and is formed in a format of, e.g., "00" minutes, "00" seconds, and "00" frames.

The loop point information (LOOP IN and LOOP OUT) indicates the start and end points of loop reproduction and, for the start/end points, the track number (Tr No.) of a single audio file or each of a plurality of audio files in the reproduction list, and the time codes (TC) in the track are each recorded. That is, in this embodiment, the loop start and end points are not limited to points in the same audio file, and may also be points in any of the audio files in the reproduction list. Therefore, loop reproduction spanning between different audio files is also possible.

The registration of an audio file in the reproduction list can be performed by shifting a default (an initial state after the start-up of a system) state from a play mode to a reproduction list registration mode via, e.g., the interface of the display screen 40. For example, the user selects the audio file of a music track to be reproduced with the selection knob 35, and registers the audio file in a desired reproduction list. At this time, the audio file is registered in the list data of the reproduction list. The user can create a reproduction list having music tracks in a desired order in the interface of the display screen 40.

The registration of the point information is performed by pressing the hot switch or the loop switch 38 during the reproduction of the audio file invoked via the reproduction list or during a temporary halt, and by registering the reproduction track and the reproduction point (time code) at the time of pressing the switch in the list data of the reproduction list.

The erasing of the hot start point and the loop point is performed by pressing the hot switch or the loop switch 38 desired to be changed while the clear switch 39 is pressed. When a new point is to be set, settings are made again according to the procedure described above.

Note that the erasing or changing of the point information may also be performed via the interface displayed on the display unit 22.

An operation when the reproduction list is selected is described hereinbelow. First, when the reproduction list selection switch 34 is pressed, the operation shifts to a reproduction list select mode. The user selects a desired reproduction list with the selection knob 35 and the enter switch 36 via the interface of the display screen 40.

Then, when a desired audio file in the reproduction list is selected, the list data (the hot start point information and the loop point information) set for the audio file is referenced, and a predetermined amount of audio data is read to the RAM 16 starting from a specified point in the audio file corresponding to the track number and the time code.

The reading of the data is performed with respect to each of the 3-system hot point information and the 1-system loop point information. After the reading of the data is ended, the LED provided in each of the switches, e.g., is lit.

Using a desired reproduction list, the user performs special reproduction as follows.

When performing hot start reproduction, the user presses the hot switch during the reproduction of an audio file in the reproduction list. At this time, the audio data stored in advance in the RAM 16 is read according to the selection of the reproduction list, and seamless reproduction is started, while reproduction is performed continuously from a point (time code) which is consecutive in the audio file of the track number recorded at the hot start point.

When performing loop reproduction, the user presses the loop switch 38 during the reproduction of an audio file in the reproduction list. At this time, the audio data stored in the RAM 16 is read according to the selection of the reproduction list, and seamless reproduction is started, while reproduction is performed continuously from a point (time code) which is consecutive in the audio file of the track number recorded at the loop start point.

As described above, in this embodiment, a large number of audio files are managed on a per reproduction-list basis, and further the hot start point information and the loop point information are managed in the reproduction list on a per audio-file basis.

In this manner, in this embodiment, the user is allowed to perform playing on a per reproduction-list basis using the two or three hot start switches 37 and the two or three loop switches 38, while having the same operation feeling as given by conventional playing on a per optical-disc basis. Therefore, the user who has been used to the conventional playing on a per optical-disc basis can reproduce a large number of audio files on a per reproduction-list basis without feeling any sense of unfamiliarity with the operation and with high operability.

In addition, it is possible to set different point information sets for each of the audio files on a per reproduction-list basis. As a result, even for the same music track, a sound effect different from one reproduction list to another can be set, and high convenience such that the range of playing performed by the user can be widened is provided.

On the other hand, in a configuration in which switches are provided for all the point information sets that have been set in the reproduction list, a large-capacity memory capable of storing therein an accordingly larger amount of data is required. For example, in a configuration in which eight switches are provided, two or three hot start points are provided for a normal operation in addition to the eight points dedicated to a play list. At this time, when data corresponding to every three seconds of a 16-bit stereo signal sampled at 44.1 kHz, e.g., is read for the total of ten to eleven hot start points, a memory having a capacity of about 14 Mbits to 16 Mbits is required. However, according to this embodiment, the switches require a memory equivalent to only at most two or three normal hot start points, and hence the effect is achieved that a memory having a capacity of about 3 Mbits to 4.2 Mbits is sufficient. In addition, a higher-bit (e.g., 24-bit)/higher-sampling-frequency (e.g., 96-kHz) audio signal has been handled in these days and, in such a case, the present effects are more effective. Thus, according to this embodiment, it is possible to provide a reproducing apparatus having a small memory capacity with high convenience and high operability which allows the setting of a large number of point information sets, while retaining low hardware cost.

On the other hand, in a configuration in which switches are provided for all the point information sets that have been set in the reproduction list, a large-capacity memory capable of storing therein an accordingly larger amount of data is required. For example, in a configuration in which eight switches are provided, when data corresponding to every three seconds is read, a memory having a capacity of about 40 Mbits is required. However, according to this embodiment, only four to six switches are required and a memory having a capacity of about 50 kbits is sufficient. Thus, according to this embodiment, it is possible to provide a reproducing apparatus having a small memory capacity with high convenience and high operability which allows the setting of a large number of point information sets, while retaining low hardware cost.

The present invention is not limited to the embodiment described above, and various modifications, alterations, addition, and the like which are obvious to those skilled in the art are possible.

In the embodiment described above, the case where the audio files are stored in the hard disk has been described as an example. However, the recording medium 26 is not limited to the hard disk, and may be anything such as a flash memory.

In the above-mentioned example illustrated in FIG. 3, it is assumed that, for each of the audio files in the reproduction list, an arbitrary point in the audio file is set. However, the point information associated with each of the audio files may also indicate a point in another audio file as long as the another audio file is in the reproduction list.

In addition, in the embodiment described above, it is assumed that the LED which lights depending on the presence or absence of allocated point data is provided inside each of the hot start switches 37 and the loop switches 38. However, a method of notifying the user of the presence or absence of the point data allocated to each of the switches is not limited thereto. For example, the LED may be provided at a place different from a place of the switch, and the presence or absence of the point data may be displayed on the display screen 40.

It is further possible to notify the user of not only the presence or absence of the point data on the selected reproduction list, but also the contents of specific settings thereof (audio file, and point in a music track). In this case, it is possible to, e.g., display a point in the audio file on the display screen 40 using a time bar or the like. In addition, it is also possible to display, as information associated with the set point, icons or the like which allow the user to recognize the contents of the settings. In this case, it may be appropriate to add the associated information as the attribute information of the audio file in the reproduction list to the icons or the like. This enables the user to recognize the contents of the settings of the point set for each of the numerous music tracks.

Further, when the data file whose information has been registered in the reproduction list has been deleted in the above-mentioned embodiment, it is possible to inhibit the selection of the file in the reproduction list. In this case, e.g., the system control unit 12 confirms whether or not the data file registered in the list exists in the recording medium 26 at the time when the reproduction list is selected, sets the file which does not exist as an unselectable file, and does not perform the reading of data to the RAM 16 based on the set point information. In this manner, abrupt sound cutoff, an unnecessary reading process, and the like are prevented, and seamless reproduction can be realized.

In addition, when settings are made for a data file in which the loop start/end points are different, and the data file containing the start point is deleted, the system control unit 12 does not perform, e.g., the reading of data to the RAM 16 based on the loop information. Conversely, when the data file containing the end point is deleted, the system control unit 12 reads data on the start point set for another data file to the RAM 16, but does not perform the reading of the end point data. In this manner, it is possible to eliminate an unnecessary process.

In the embodiment described above, the case where the present invention is applied to an audio file has been described. However, the present invention is also appropriately applicable to a case where video data is processed.

A person skilled in the art would easily recognize that the detailed description given above is only illustrative of the present invention, and that numerous alterations are possible in the illustrative embodiment without significantly departing from the novel disclosure and advantages of the present invention. Therefore, it is intended that such alterations are entirely incorporated in the scope of the present invention.

### Industrial Applicability

The present invention provides improvements in operability and convenience in a technology of reproducing a plurality of data files on a per reproduction-list basis, and has an extremely wide range of industrial applicability.

## Claims

1. A reproducing apparatus (10), comprising:
a storage unit for storing therein a plurality of data files and one or a plurality of reproduction lists for managing data files selected from among the plurality of data files, each reproduction list containing one or more of the plurality of data files,
each reproduction list further comprising list data that includes point information associated with each of the data files contained in the reproduction list, wherein the point information associated with a respective data file includes hot start point information and loop point information set for the respective data file, the loop point information indicating start and/or end points for loop reproduction,
an operation unit (24) for accepting a reproduction list selecting operation and a data file selecting operation for selecting a data file contained within a selected reproduction list,
the operation unit (24) being configured to accept a reproduction request based on the hot start point information and/or loop point information associated with the selected data file,
the reproducing apparatus (10) further having a control unit (12) for controlling reproduction of the selected data file in response to the reproduction request,
the reproducing apparatus (10) having a memory unit (16) for temporarily storing a predetermined amount of data starting from each hot start point and start point for loop reproduction in the selected data file, the reproducing apparatus being configured to read the predetermined amount of data into the memory unit (16) in response to the data file selecting operation, and to read the predetermined amount of data out from the memory unit (16) in response to the reproduction request,
the reproducing apparatus further having means for notifying the user when the predetermined amount of data has been read into the memory unit (16).

2. A reproducing apparatus (10) according to claim 1, wherein the start and end points for loop reproduction are associated with different data files in the same reproduction list

3. A reproducing apparatus (10) according to claim 1 or 2, wherein a same data file is contained in more than one reproduction list.

4. A reproducing apparatus (10) according to any one of claims 1 to 3, having means for notifying the user that the hot start point information and/or loop point information in the selected data file have been set.

5. A reproducing apparatus (10) according to any one of the preceding claims having means for notifying a user of the position of each hot start point and/or the position of each start and end point for loop reproduction in the selected data file

6. A reproducing apparatus (10) according to anyone of the preceding claims wherein each reproduction list contains attribute information associated with each data file contained therein, the apparatus having means for notifying a user of the attribute information associated with the selected data file.

7. A reproducing method, comprising:
storing a plurality of data files and one or a plurality of reproduction lists for managing data files selected from among the plurality of data files in a storage unit, each reproduction list containing one or more of the plurality of data files,
each reproduction list further comprising list data that includes point information associated with each of the data files contained in the reproduction list, wherein the point information associated with a respective data fileincludes hot start point information and loop point information set for the respective data file, the loop point information indicating start and/or end points for loop reproduction,
accepting a reproduction list selecting operation and a data file selecting operation for selecting a data file contained within a selected reproduction list,
reading a predetermined amount of data starting from each hot start point and start point for loop reproduction in the selected data file into a memory unit (16), in response to the data file selecting operation,
notifying a user when the predetermined amount of data has been read into the memory unit (16),
accepting a reproduction request based on the hot start point information and/or loop point information associated with the selected data file,
performing control to reproduce the selected data file in response to the reproduction request, wherein reproduction of the selected data file begins by reading the predetermined amount of data out from the memory unit (16).

8. A program for controlling a computer to execute the method of claim 7.

9. A recording medium having recorded thereon the program according to claim 8.

## Patentansprüche

1. Wiedergabevorrichtung (10), umfassend:
eine Speichereinheit zum darauf Speichern einer Vielzahl von Datendateien und einer oder einer Vielzahl von Wiedergabelisten zum Verwalten von Datendateien, die aus der Vielzahl von Datendateien ausgewählt sind, wobei jede Wiedergabeliste eine oder mehrere der Vielzahl von Datendateien umfasst,
wobei jede Wiedergabeliste ferner Listendaten umfasst, die Punktinformationen umfasst, die jeder der Datendateien, die in der Wiedergabeliste enthalten sind, zugeordnet sind, worin die einer dazugehörigen Datendatei zugeordneten Punktinformationen Warmstartpunktinformationen und Schleifenpunktinformationen umfassen, die für die dazugehörige Datendatei eingestellt sind, wobei die Schleifenpunktinformationen Ausgangs- und/oder Endpunkte für eine Schleifenwiedergabe anzeigen,
eine Betriebseinheit (24) zum Annehmen eines Wiedergabelisteauswahlvorgangs und eines Datendateienauswahlvorgangs zum Auswählen einer in einer ausgewählten Wiedergabeliste enthaltenen Datendatei,
wobei die Betriebseinheit (24) konfiguriert ist, um eine Wiedergabeanfrage basierend auf den der ausgewählten Datendatei zugeordneten Warmstartpunktinformationen und/oder Schleifenpunktinformationen anzunehmen,
wobei die Wiedergabevorrichtung (10) ferner eine Steuereinheit (12) zum Steuern der Wiedergabe der ausgewählten Datendatei als Antwort auf die Wiedergabeanfrage umfasst,
wobei die Wiedergabevorrichtung (10) eine Speichereinheit (16) zum temporären Speichern einer vorbestimmten Datenmenge ausgehend von jedem Warmstartpunkt und Ausgangspunkt für eine Schleifenwiedergabe in der ausgewählten Datendatei aufweist, wobei die Wiedergabevorrichtung konfiguriert ist, um die vorbestimmte Datenmenge als Antwort auf den Datendateiauswahlvorgang in die Speichereinheit (16) einzulesen und die vorbestimmte Datenmenge als Antwort auf die Wiedergabeanfrage aus der Speichereinheit (16) auszulesen,
wobei die Wiedergabevorrichtung ferner Mittel zum Benachrichtigen des Benutzers, wenn die vorbestimmte Datenmenge in die Speichereinheit (16) eingelesen wurde, umfasst.

2. Wiedergabevorrichtung (10), nach Anspruch 1, worin die Ausgangs- und die Endpunkte für die Schleifenwiedergabe verschiedenen Datendateien in derselben Wiedergabeliste zugeordnet sind.

3. Wiedergabevorrichtung (10) nach Anspruch 1 oder 2, worin dieselbe Datendatei in mehr als einer Wiedergabeliste enthalten ist.

4. Wiedergabevorrichtung (10) nach einem der Ansprüche 1 bis 3, wobei diese Mittel zum Benachrichtigen des Benutzers darüber, dass die Warmstartpunktinformationen und/oder die Schleifenpunktinformationen in den ausgewählten Datendateien eingestellt wurden, umfasst.

5. Wiedergabevorrichtung (10) nach einem der vorangegangenen Ansprüche, wobei diese Mittel zum Benachrichtigen eines Benutzers über die Position jedes Warmstartpunkts und/oder die Position jedes Ausgangs- und jedes Endpunkts für die Schleifenwiedergabe in der ausgewählten Datendatei umfasst.

6. Wiedergabevorrichtung (10) nach einem der vorangegangenen Ansprüche, wobei jede Wiedergabeliste Zuordnungsinformationen umfasst, die jeder darin enthaltenen Datendatei zugeordnet ist, wobei die Vorrichtung Mittel zum Benachrichtigen eines Benutzer über die Zuordnungsinformation umfasst, die der ausgewählten Datendatei zugeordnet ist.

7. Wiedergabevorrichtung, umfassend:
Speichern einer Vielzahl von Datendateien und einer oder einer Vielzahl von Wiedergabelisten zum Verwalten von Datendateien, die aus der Vielzahl von Datendateien in einer Speichereinheit ausgewählt sind, wobei jede Wiedergabeliste eine oder mehrere der Vielzahl von Datendateien umfasst,
wobei jede Wiedergabeliste ferner Listendaten umfasst, die Punktinformationen umfasst, die jeder der in der Wiedergabeliste enthaltenen Datendateien zugeordnet sind, worin die einer dazugehörigen Datendatei zugeordneten Punktinformationen Warmstartpunktinformationen und Schleifenpunktinformationen umfassen, die für die dazugehörige Datendatei eingestellt sind, wobei die Schleifenpunktinformationen Ausgangs- und/oder Endpunkte für eine Schleifenwiedergabe anzeigen,
Annehmen eines Wiedergabelisteauswahlvorgangs und eines Datendateienauswahlvorgangs zum Auswählen einer in einer ausgewählten Wiedergabeliste enthaltenen Datendatei,
Einlesen einer vorbestimmten Datenmenge ausgehend von jedem Warmstartpunkt und Ausgangspunkt für eine Schleifenwiedergabe in der ausgewählten Datendatei in eine Speichereinheit (16) als Antwort auf den Datendateiauswahlvorgang,
Benachrichtigen eines Benutzers, wenn die vorbestimmte Datenmenge in die Speichereinheit (16) eingelesen wurde,
Annehmen einer Wiedergabeanfrage basierend auf den der ausgewählten Datendatei zugeordneten Warmstartinformationen und/oder Schleifenpunktinformationen,
Durchführen einer Steuerung, um die ausgewählte Datendatei als Antwort auf die Wiedergabeanfrage wiederzugeben, worin die Wiedergabe der ausgewählten Datendatei mit dem Auslesen der vorbestimmten Datenmenge aus der Speichereinheit (16) beginnt.

8. Programm zum Steuern eines Computers, um das Verfahren nach Anspruch 7 auszuführen.

9. Aufnahmemedium, auf dem das Programm nach Anspruch 8 aufgezeichnet ist.

## Revendications

1. Appareil de reproduction (10), comprenant :
une unité de stockage destinée à y stocker une pluralité de fichiers de données et une ou une pluralité de listes de reproduction pour gérer des fichiers de données sélectionnés parmi la pluralité de fichiers de données, chaque liste de reproduction contenant un ou plusieurs de la pluralité de fichiers de données,
chaque liste de reproduction comprenant en outre des données de liste qui comprennent des informations de point associées à chacun des fichiers de données contenus dans la liste de reproduction, où les informations de point associées à un fichier de données respectif comprennent des informations de point de démarrage à chaud et des informations de point de boucle définies pour le fichier de données respectif, les informations de point de boucle indiquant des points de départ et/ou de fin pour une reproduction en boucle,
une unité de fonctionnement (24) pour accepter une liste de reproduction sélectionnant une opération et un fichier de données sélectionnant une opération pour sélectionner un fichier de données contenu dans une liste de reproduction sélectionnée,
l'unité de fonctionnement (24) étant configurée pour accepter une demande de reproduction sur la base des informations de point de démarrage à chaud et/ou des informations de point de boucle associées au fichier de données sélectionné,
l'appareil de reproduction (10) ayant en outre une unité de contrôle (12) pour contrôler une reproduction du fichier de données sélectionné en réponse à la demande de reproduction,
l'appareil de reproduction (10) ayant une unité de mémoire (16) pour stocker, de manière temporaire, une quantité prédéterminée de données commençant à partir de chaque point de démarrage à chaud et point de départ pour une reproduction en boucle dans le fichier de données sélectionné, l'appareil de reproduction étant configuré pour lire la quantité prédéterminée de données dans l'unité de mémoire (16) en réponse à l'opération de sélection de fichier de données, et pour lire la quantité prédéterminée de données de l'unité de mémoire (16) en réponse à la demande de reproduction,
l'appareil de reproduction ayant en outre un moyen pour notifier à l'utilisateur quand la quantité prédéterminée de données a été lue dans l'unité de mémoire (16).

2. Appareil de reproduction (10), selon la revendication 1, dans lequel les points de départ et de fin de la reproduction en boucle sont associés avec différents fichiers de données dans la même liste de reproduction.

3. Appareil de reproduction (10) selon la revendication 1 ou la revendication 2, dans lequel un même fichier de données est contenu dans plus d'une liste de reproduction.

4. Appareil de reproduction (10), selon l'une quelconque des revendications 1 à 3, ayant un moyen pour notifier à l'utilisateur que les informations de point de démarrage à chaud et/ou les informations de point de boucle dans le fichier de données sélectionné ont été définies.

5. Appareil de reproduction (10) selon l'une quelconque des revendications précédentes ayant un moyen pour notifier à un utilisateur la position de chaque point de démarrage à chaud et/ou la position de chaque point de départ ou de fin pour une reproduction en boucle dans le fichier de données sélectionné.

6. Appareil de reproduction (10) selon l'une quelconque des revendications précédentes, dans lequel chaque liste de reproduction contient des informations d'attribut associées à chaque fichier de données y étant contenu, l'appareil ayant un moyen pour notifier à un utilisateur des informations d'attribut associées au fichier de données sélectionné.

7. Procédé de reproduction, comprenant les étapes suivantes :
stocker une pluralité de fichiers de données et une ou une pluralité de listes de reproduction pour gérer des fichiers de données sélectionnés parmi la pluralité de fichiers de données dans une unité de stockage, chaque liste de reproduction contenant un ou plusieurs de la pluralité de fichiers de données,
chaque liste de reproduction comprenant en outre des données de liste qui comprennent des informations de point associées à chacun des fichiers de données contenus dans la liste de reproduction, où les informations de point associées à un fichier de données respectif comprennent des informations de point de démarrage à chaud et des informations de point de boucle définies pour le fichier de données respectif, les informations de point de boucle indiquant des points de départ et/ou de fin pour une reproduction en boucle,
accepter une opération de sélection de liste de reproduction et une opération de sélection de fichier de données pour sélectionner un fichier de données contenu dans une liste de reproduction sélectionnée,
lire une quantité prédéterminée de données commençant à partir de chaque point de démarrage à chaud et point de départ pour une reproduction en boucle dans le fichier de données sélectionné dans une unité de mémoire (16), en réponse à l'opération de sélection de fichier de données,
notifier à un utilisateur quand la quantité prédéterminée de données a été lue dans l'unité de mémoire (16),
accepter une demande de reproduction sur la base des informations de point de démarrage à chaud et/ou des informations de point de boucle associées au fichier de données sélectionné,
exécuter un contrôle pour reproduire le fichier de données sélectionné en réponse à la demande de reproduction, où une reproduction du fichier de données sélectionné commence par la lecture de la quantité prédéterminée de données de l'unité de mémoire (16).

8. Programme pour contrôler un ordinateur pour exécuter le procédé selon la revendication 7.

9. Support d'enregistrement sur lequel est enregistré le programme selon la revendication 8.
